# EUROPEAN PATENT APPLICATION

(11) **EP 2 677 696 A2**
(43) Date of publication of application: **25.12.2013**
(21) Application number: 13184006.8
(22) Date of filing: 04.08.2011
(51) Int. Cl.: H04L 12/28

(54) **Method for adjusting the optical power emitted by a flashlight belonging to a home automation system.**

(30) Priority: 06.08.2010 IT VR20100168
(62) Divisional of application: 11754505.3
(71) Applicant: Nice Spa, 31046 Oderzo (TV) (IT)
(72) Inventor: Oscar, Marchetto, 31046 Oderzo (TV) (IT); Ferron, Paolo, 31046 ODERZO (TV) (IT)
(74) Representative: Citron, Massimiliano

(57) **Abstract**

Here is described a method for adjusting the optical power emitted by a flashlight belonging to a home automation system formed by components (S1, S2) and a control unit (M1) networked together and adapted to coordinate and/or to supervise for safety the maneuver of a movable barrier such as sliding or hinged gates, doors or garage doors, shutters, blinds, curtains or blinds in general, characterized in that the light intensity of the flashlight is modified on the basis of conditions detected by a sensor of ambient light.

## Description

The invention relates to an automation system, with components adapted to coordinate the maneuver of e.g. sliding or swing gates, which we will refer to here as an example, doors or garage doors, shutters, blinds, curtains or blinds in general, in particular to a method for adjusting the optical power emitted by a flashlight belonging to a home automation system.

The invention can generally be applied to all horizontal- or vertical-movement closing barriers (left-right), between two end-positions.

The systems to automate the movement of a gate are usually composed primarily of at least one electric motor to move the gate, a central control unit, plus safety components such as photocells and pressure sensitive edges, alarms (buzzers or flashers) and command and management interfaces for the user, such as keypads and/or displays.

The devices are generally connecter to each other by several wirings, which carry power supply and control signals. The cable connection is widely used but is quite expensive to install. One has to lay pipes or ducts for the passage of the cables with their masonry; small excavations and restoration works are needed, and spending a lot of time in labor and materials is usual. The costs are very high, and so is the risk of errors in the connections.

In some models there exist hybrid solutions wherein some elements are battery powered and function by radio, e.g. pressure sensitive edges, digital keypads, transponder card readers, while in some case only the photocells are battery powered. The receiver photocells are still powered by cable and send control signals by cable mainly because of the power consumption: while the transmitting photocells can transmit even with pauses, for safety reasons the receiving ones must always be listening.

We add that there are specific regulations governing the intervention timing of the safety devices in the automation, such as photocells and sensitive edges. They have to ensure rapid response during the movement in the automation, therefore also the minimum times of transmission determine high consumption and collide with energy autonomy.

Other known systems with partially wireless architecture eliminate the wiring by replacing it with wireless links, but the network architecture remains the same as the wired systems, wherein each device is stored in a control unit by a coding set by mechanical selectors (jumpers or DIP switches).

The main object of the invention is to provide an automation system for the automation of gates, doors or garage doors, or the like, which guarantees certain working autonomy for several years. A further object is a systemwhich is cheap, quick to install and does not call for a laborious installation.

A further object is that the system be reliable and immune to disturbances.

A further object is that the system have good response speed to the user's commands even guaranteeing long working autonomy.

These objects are achieved by methods and devices to implement them as in the appended claims.

Although the inventive system is easily installed on site, a problem of a totally wireless system (communication and power) using known techniques collides with the high energy consumption of the same.

Preferred variants that solve these problems are defined in the dependent claims.

The invention regards a method for adjusting the optical power emitted by a flashlight belonging to a home automation system formed by components and a control unit networked together and adapted to coordinate and/or to supervise for safety the maneuver of a movable barrier such as sliding or hinged gates, doors or garage doors, shutters, blinds, curtains or blinds in general, wherein the light intensity of the flashlight is modified on the basis of conditions detected by a sensor of ambient light.

The aforementioned method may foresee that the light intensity to use for the flashlight is determined by comparing the light sensor signal with one or more thresholds.

Other features and advantages of the invention will be more evident by the exemplary description of an automation system, together with the attached drawing in which:
Figure 1 shows a block diagram of a system according to the invention;
Figure 2 shows a timeline of the system of Fig. 1 in a non-maneuver state (door still);
Figure 3 shows a timeline of the system of Fig. 1 in a state of maneuver (moving door);
Figure 4 shows a timeline of the system of Fig. 1 in a condition of end maneuver (no movement);
Figure 5 shows a timeline of the system of Fig. 1 for photocells;
Figure 6 shows a block diagram for flasher comprised in the system of Fig. 1;
Figure 7 shows a block diagram for photocells in the system of Fig. 1.

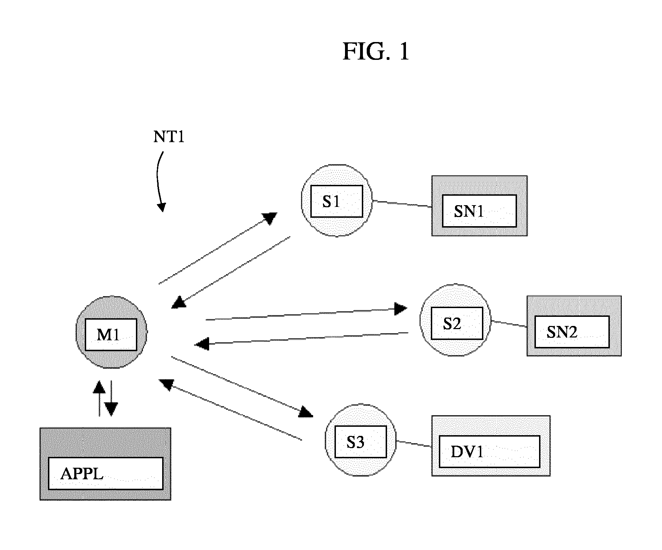

A home automation system according to the invention composed of traditional components is shown in Figure 1.

One of the possible configurations of the network is star structure, with a Master node that forms the star center. See Figure 1, which shows schematically a network NT1 that adopts the known Master/Slave transmission technique, with the star center that serves as the Master node M1, and peripheral nodes that act as Slave nodes, indicated with S1, S2, etc. All nodes, Master and Slave, can be completely integrated in the same component (electronic central units also integrated in the gearmotor, photocells, sensitive edges, flashing lights, card readers, keyboards, etc.) or can be made into a separate body and then associated. The network NT1 exhibits an electronic control unit as the Master node M1 and at least one photocell or similar as peripheral devices or Slave nodes S1, S2, etc.

Each Slave has no cable connection with the outer world, and is equipped with a power-supply battery, preferably self-rechargeable by a solar module. It is understood that due to the wireless connection of each Slave, it is very easy to place it in the environment without great building modifications and in short time.

Both the Master M1 and the Slaves S1, S2, etc. are each equipped with a microcontroller and a radio transmitter, not shown. The aim is to let the Master and the Slaves send and receive from/to each other coded control radio signals and data, indicated symbolically by the bi-directional arrows in Figure 1. When we will describe below the operations performed by a Master or a Slave by attributing them for the sake of brevity directly to one of the two, we tacitly mean that the respective microcontroller executes program instructions and/or drives means or hardware devices adapted to perform the operation and/or the radio transmitter is controlled and/or the received signal is processed in order to perform these operations.

As it can be seen a Master M1 communicates with the Slaves S1, S2, which can act as interfaces to sensors SN1, SN2, etc. or other devices DV1, DV2, etc. The Master M1 can also communicate with an application block APPL. For reasons of compatibility with existing control units the Master node M1 can be connected to a control unit through the bus line, as an interface, making the pre-existing control unit (the application APPL) believe that the installed peripheral devices are devices connected by cable to the bus. This solution enables the creation of hybrid automations with cable and/or wireless devices. It will be indeed possible, by inserting into the bus the Master M1 interface, to add wireless members to already existing wired automations.

Note that in this type of applications one can not expect from an end user or the installer (generally electricians) self-possessed skills of radio technology, thus the realization of the network must take place easily and reliably, that is to say that the setup process should be invisible to the user and occur in a simple and automatic manner.

The process of (re)initialization/(re)configuration of the network according the invention is very simple, intuitive and requires no experience or special knowledge from the installer. Moreover, an inexperienced user is able to diagnose and fix any malfunction simply.

It is possible to activate and perform the initialization procedure after the mechanical fixing in situ of all components belonging to the network, but it is also possible to take the reverse path, i.e. to perform the setup procedure in a different place. For example, one can work at home or in factory to create the communication network, and then proceed only to the mechanical fastening of components in situ. The second procedure has the advantage of creating the network in place without obstacles and free from radio interference, a situation of greater convenience and protected from the weather conditions.

A preferred sequence of operations for the network configuration is as follows:
- the Master is turned on first (the Master is powered by inserting a battery, by cable or bus if the Master is wired or integrated into the structure of the gearmotor);
- the Master, like every other node in the network, as soon as it is switched on verifies (in its non-volatile memory) if it is not already part of a network. If not, it generates a code/pseudorandom number to form its address. In the Master, the generated code/number, besides being its own address, will also be the address of the network which it will control. To make it unlikely that two Master devices can generate two identical codes every byte that makes up the address can be generated e.g. as follows: performing the XOR operation between the byte (or Word) which represents the Received Signal Strength Indicator (RSSI), and the byte which represents the LSB byte of the battery voltage and the byte which represents the ambient temperature, all recorded and digitally converted by an ADC.

To avoid interference problems in case two Masters of two neighboring networks generate the same address, so that a Slave receives messages from two different Masters, the invention provides that whenever the Master node generates an address, it tries to communicate with any adjacent Master using a particular message. The Master verifies with the adjacent ones that its newly generated address is unique, not equal to that of the adjacent Masters. Unless the Master receives an objection the address is stored, otherwise it generates a new one and repeats the verification process with the other Masters;
- signaling means present on the Master, for example a LED that flashes, indicate that no Slave is still part of its network,
- at this point, automatically and/or through e.g. the push of a button by a user, the Master enters the Slave acquisition mode, i.e. it stays listening for the connection request from a Slave;
- by inserting the battery in a Slave, or, if it is already inserted, with the push of a button, the Slave is commanded to emit by radio the connection request and its own identification code, which will be received and stored by the Master. To acknowledge, the Master can signal that the connection has taken place through warning means, e.g. a sound by a buzzer;
- the Master will send to the Slave just connected a signal of proper connection, to which e.g. the Slave can answer signaling by warning means the condition of joining to the network NT1, e.g. by turning some LEDs on; then the procedure for the Slave is closed;
- the procedure is repeated for all the Slave to be installed;
- the acquisition procedure is terminated e.g. by pressing a button on the Master or after the expiration of a preset timing.

At this point the network is installed/configured and ready to work.

Of course, the sequence can be performed in factory too, before the assembly.

It is important to understand, even without special equipment, if the whole network works well, and eventually to be able to fix it. To solve the problem of simplifying the diagnostic corrective intervention, the invention envisages means for verifying the proper functioning of the installed network. E.g. a problem during installation of the wireless network is that the installer can not easily recognize if the radio signal arrives correctly and with the necessary intensity for each component. The solution of the invention is to provide each Slave, and preferably also the Master, with indicator means of the received field, e.g. a v-meter, some LEDs or a small display. In this way one can e.g. visually verify the good radio reception during installation and/or before fixing the devices, thereby changing their position if necessary. This optimizes the radio transmission by decreasing the energy consumption and consequently by increasing the battery life.

Another recurring problem is assessing the alignment of the optical transmitters and receivers present in the photocells. According to the invention, by indicator means, e.g. an LED on a photocell, one can check the alignment: the duty-cycle of the flashing is proportional to the received power from the receiver.

Preferably in the Master node there are signaling means that are activated when a device or security sensor Slave detects (and transmits to the Master) a condition of danger. E.g. when an obstacle is interposed between two photocells, or when a sensitive edge is bumped, as a confirmation an LED lights up on the Master.

As a signaling means one can use two LEDs of different colors, and/or a buzzer.

It is preferable that when the battery is replaced in a Slave besides the flashing as described above the same Master and/or Slave activates the signaling means, e.g. with beeps as explained below to indicate if the battery just inserted is charged or not.

The absence of sound could usefully indicate some problem of communication between devices. One can thus quickly replace an exhausted battery without having to track down the problem, per se trivial, on the whole network.

When the network is initialized and operational it can work in two states: state of non-maneuver (door stopped or mode called SLEEP-mode) or in a state of maneuver (moving door).

### NON-MANEUVER STATE

In percentage, in terms of time, the network NT1 works more in a mode of non-maneuver, i.e. with the barrier/door stopped.

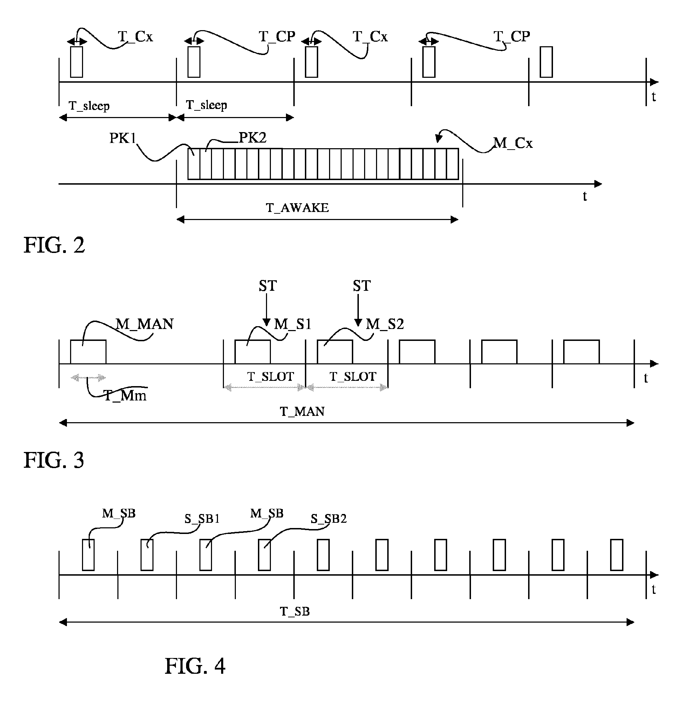

In non-maneuver the Master is inactive because it does not transmit to the Slaves, or it transmits with a very long period, while all the Slave nodes are in sleep mode, which is a WOR (wake-on-radio) low-power mode. See Fig. 2.

Each Slave is listening on a radio listening-time window for equal times T_CX and T_CP to verify the presence respectively of an activating signal M_Cx from the Master on a predefined channel CP or a channel Cx used in the previous maneuver. The times T_CP and T_CX are the time windows in which the Slave is listening. During the time that span between a listening and another, the Slave is in stand-by, and saves energy (all components are off except for an internal timer).

The use of several channels makes the system more robust: in fact, the Master at his discretion may choose which of the channels is to be used in the next maneuver. The channel CP, which is preferably fixed and determined at the factory, never changes throughout the life of the system, and serves as recovery channel and emergency channel to allow the Master node to try awakening the Slaves when it does not know if all of them are listening on the same channel or if the last channel Cx is disturbed. The channel Cx actually used in transreceiving is variable, and results the one chosen by the Master maneuver by maneuver (according to established signal quality criteria) because less disturbed.

Preferably nearly 14 distinct channels can be used for the 868MHz band, between which the Cx channel is chosen.

The periods T_Cx and T_CP are equal, i.e. 300 µs, and repeat with a period T_sleep of e.g. 500 ms. Therefore the duty cycle (or working cycle) of the radio receiver is 0.3/500 = 0.0006. Such a low value, which is seen experimentally to ensure accurate detection of a signal from the Master, ensures a very high battery life, which can not be reached if the Slaves were always listening to a radio channel. Obviously, the duty cycle can be varied according to specific application needs.

The Slaves remain in the condition described (SLEEP-mode) until they detect the signal M_Cx coming from/sent by the Master.

The Master can tranceive signals and data with other Masters of near networks, to exchange useful information for the managing and optimization of the network (e.g. the Masters can exchange the list of 14 channels used, the characteristics thereof and specify the channels used during transmission).

An additional, but no less important, reason for using the SLEEP-mode is to limit the number of transmissions. The system must respect the Regulations in the 868MHz band with respect to "Non-specific Short Range Device, SRD", which limits the maximum transmission time called Duty-Cycle. The minimum value is 0.1%, which is the ratio, on average, between the transmission time and the time wherein no transmission occurs in a hour.

### MANEUVER STATE

The state of maneuver is composed by the following phases:
- selecting phase of the channel to be used by the Master;
- awakening phase of the Slaves;
- phase of maneuver;
- phase of end maneuver.

To awake all the Slaves the Master analyzes all the available channels, updating a statistical "channel quality" table determined by quality or S/N ratio factors. On the basis of the statistical table the Master selects the best actual channel, and the best between the channel CP and the channel Cx used in the previous maneuver. Such a channel is the one the Slaves are tuned on for listening during the whole non-maneuver state (still door).

Then the Master sends a "wake-up" command to the Slaves on a channel chosen between Cp and Cx used in the previous maneuver. Now the Slaves are ready to start the maneuver.

On the other hand, the channel CP is used as an emergency channel, i.e. probably very scarcely. Therefore, during the non-maneuver it has low probability of collision (interference from other transmitters).

All this prevents the Master and the Slave of a network from tuning on channels engaged by other networks, and improves the overall signal/noise ratio of transmissions in the network.

When the Master, which encompasses the entire decisional intelligence of the system, receives a maneuver command from a user, through e.g. a remote control or a correct password or a combination of access from a keypad, it begins to prepare the network NT1 to execute the maneuver required. E.g. it can be required to open a gate through activation and control of a motor.

To bring the Slaves in active state and out of the low-power state, the Master - see Fig. 3 - transmitS on the selected channel Cx or Cp. For simplicity we establish the use of the channel Cx. The Master then transmits a message or data signal M_Cx with duration T_AWAKE greater than 2 * T_SLEEP (T_Cx or T_Cp), e.g. 1010ms. In this way each Slave surely receives the message M_Cx.

The message M_Cx contains packets PK1, PK2, etc. with service information for the Slaves, including the new channel to be actually used during the maneuver (see previous paragraph).

The message M_Cx is broadcast and necessarily received by all the Slaves, or during the window T_Cx or T_CP. The message M_Cx contains the address of the Master, which is implicitly the network address, consisting of sub-messages numbered PK1, PK2, ... PKn which are in temporal succession. When a Slave in SLEEP-state receives a packet PKn, since the total number of packets PK is known in advance, it knows the future transmission timing of the Master, and thus stops the listening turning off the transceiver to reduce consumption until the end of the message M_Cx.

The packets PKn of M_Cx are numbered sequentially, thus by knowing both the total number of packets PKn and how long (fixed total length of time) a single packet PK is, the Slave has all the data to know how much it will have to wait before the message M_Cx is concluded. In other words, the forwarding frequency of the PKn messages broadcast from the Master to the Slave is fixed and does not change. So the Slaves, once they have received an initial packet PK, remain synchronized to the Master because they know when (how much time after) the next message M_Cx (or M_CP) will arrive. During the waiting the Slave is not listening, then the energy consumption is lower. Each packet PKn always contains the same information repeated n times and each Slave can intercept any one of the packets. There are synchronized packets, uniquely assigned to each Slave.

It can happen that the Master sends the message M_Cx on the fixed channel CP, when, finished the preceding maneuver, the Master during the acknowledge/polling phase has not detected all the components installed or if the channel Cx, when choosing the channel, is disturbed.

At this point all the network NT1 is active, ready to communicate on the channel selected by the Master.

If a Slave does not wake up then the Master will not know his status. If this Slave performs security functions needed to the maneuver, it is the central control unit (connected to the Master) or the Master which prevent the maneuver. If the Slave has no security functions, e.g. is a flashing light, the operation continues in any case.

Having obtained the preparation and the awakening of all the Slaves, the Master forwards a message M_MAN, unique for all the Slaves, for example with a period T_MAN of 50ms (experimental data) (see Fig. 3). The message M_MAN contains instructions and commands for all Slaves, and each Slave decodes its own dedicated part.

The message M_MAN, with a duration T_Mm lasting about 1.5 ms in a slot of about 10ms, is a packet in which there is the network address and the data/command part directed to each type of Slave. During the maneuver the message M_MAN requires only the state of the safety devices.

After the message M_MAN, each Slave containing a safety device sequentially responds with the respective messages M_S1, M_S2, etc. The Slaves that are not safety devices (e.g. a flasher or a keypad) do not transmit to the Master, but in any case receive and process the message M_MAN.

Preferably the response time to the Master for each Slave is defined by dividing a fraction of T_MAN in a number of same parts equal to the number of Slaves (called slot ST of duration T_SLOT). Such partition of the time into slots ST, made by the Master and communicated to the Slave at the end of the initialization/configuration of the network, occurs dynamically depending on the number of Slaves in the network NT1. E.g. if one has at disposal 50-10 = 40ms, and there are two Slaves then T_SLOT will be of 20ms; if there are ten Slaves each slot will be of 2ms. In Fig. 3 is presented the case of five Slaves.

Thus, the division of time is similar to the deterministic case, with the difference that each Slave has at disposal more than the time strictly necessary to allow a MAC of type CSMA (Carrier Sense/Listen Before Talk) inside each slot ST.

Experimentally and advantageously it has been found that the responses of the Slaves (M_S1, M_S2 ,......) to the message M_MAN of the Master can be "suspended". In fact, during the maneuver (door movement), the Slave does not send a reply for each message of the Master but responds, for example, once out of ten received messages. This occurs only when the maneuver proceeds without problems, otherwise the Slave transmits a response to each message of the Master. This behavior allows an energy saving of the Slave and less network traffic.

The signal M_MAN contains a flag of "activated maneuver", which is received by all the Slaves, and serves as a synchronization signal for the answers M_Sn, and contains for each Slave the indication of what data has to be returned to the Master.

The responses M_Sn of the n Slaves in fact contain an identification code of the transmitting Slave, the data or information requested by the Master, e.g. the state of a photocell or a sensitive edge, or an identification of the Master and/or of their own network, so that another Master of a near network will not confuse for its own the Slave of others. The Master in the packets M_Sn can distinguish not only the identification of the Slave, to verify the membership to the network NT1 by comparison with a table of Slaves populated at the initialization phase, but also its own code of Master, as a further confirmation.

So, with period T_MAN the Master perfectly knows the status of each Slaves (of his), and ultimately the status of the network NT1, and then of the automation system.

The Master can directly control a motor that moves the movable barrier, or it can be an interface between a wired bus of the automation and the wireless network NT1. The Master can be integrated in the central unit or implemented as an additional element to be added to existing central units through the bus connection, and therefore it becomes an indirect control. Through the bus the Master can provide to the central unit the data supplied by radio by the Slave, and then the central unit controls the motor using the data provided by the wireless sensors. The Master interface can be installed on any control unit already existing with the bus.

The motor is activated after the first dispatch of message M_MAN and relative positive confirmation of the Slaves.

The plot shown in Fig. 3 is repeated periodically throughout the time required to the maneuver.

The Master at each dispatch of M_MAN preferably does a Carrier Sense (listen before talk). Essentially, the Master listens on the selected channel and evaluates the quality of the channel. There could be e.g. noise or interference due to transmission of elements from other networks. If the channel is free, the Master transmits the signal M_MAN, otherwise it waits for a random time, e.g. 500us. After a couple of unsuccessful attempts for a favorable channel, the Master will transmit on the selected channel at the maximum available power, so the transmitted signal will go over disturbances or interference reaching the Slaves.

In each slot ST, every Slave preferably does a Carrier Sense. In case of disturbed channel the Slave waits for its own transmission turn during the next period T_MAN. If after a few periods T_MAN that Slave has not been able to transmit the data to the Master, the latter (or the central control unit) for safety stops the movable barrier. The time shift due to the Carrier-Sense is one of the parameters involved in evaluating the quality of the channel. Obviously if a shift gets noticed, this means that the channel at that moment is disturbed resulting in a negative evaluation of the respective channel. Advantageously, when the dialogue between Master and Slave is not successful because the chosen channel Cx is disturbed, it is possible to use another channel, e.g. CP.

Since during maneuvering the Master knows the presence and the state only of the safety devices (the non-safety Slaves during the maneuver only receive the orders from the Master but do not answer), at the end of the maneuver the Master begins a procedure of "polling" of its own devices.

The procedure steps in this mode are, for example. the following. The Master sends in the message M_MAN a stop/still command, to warn all the Slaves. The Slaves will then prepare for the next end-of-the-maneuver phase, quickly turning on the radio receiver waiting for the next message M_SB from the Master (Fig. 4). The message M_SB is not broadcast-type but is addressed uniquely to each Slave, according to the Slave table created by the Master during the installation phase. So the messages M_SB will be n as the n Slaves, indicated with M_SBn. When a Slave receives its own message M_SB1, M_SB2, ..., to indicate its active state it responds with its own respective message S_SB1, S_SB2, etc.... (Fig. 4). The message M_SBn can contain instructions of different nature, for example a command for sending the state or returning into low-power mode. The packet M_SB and S_SBn takes about 1.5 ms.

In the event that a Slave does not respond to successive attempts by the Master, the Master signals by signaling means (e.g. a buzzer or LED lights.) the malfunctioning of the system or some possible anomaly.

The frame of Fig. 4 is then repeated with a period T_SB (set in factory, for example 500ms). Since each Slave knows, thanks to the indexing built previously, the time distance from the first signal M_SB that the packet destined to it will occupy not to overlap with other Slaves, to consume little it can turn on its receiver only when needed, in proximity of the packet M_SB. That is, the Slave knows when the signal M_SB destined for it arrives: once the first packet M_SB is received, each Slave stays synchronized because it is known that the next packet M_SB will arrive after a time T_SB.

The Master places an information in the messages M_SB and commands across the whole network the SLEEP-mode. When all the Slaves installed on the network respond with the message M_SB or if a timer reaches zero, then the network returns to sleep-mode with low consumption.

It is known that the photocells of a system like this have high consumption, and reduce the battery life in a wireless system. In particular, emitting and receiving photodiodes are the main responsible of the high consumption.

The invention solves the autonomy problem in the following way.

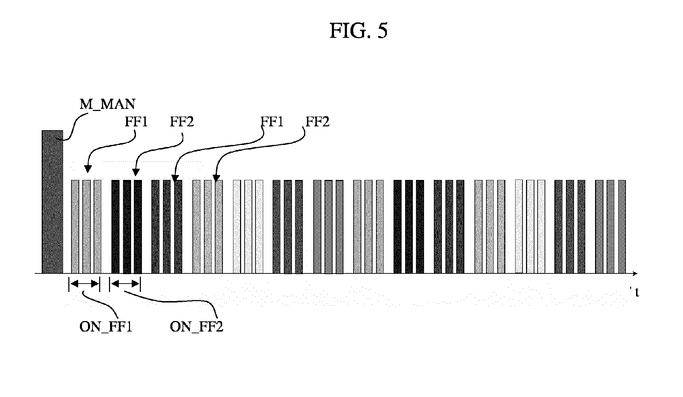

With reference to Fig. 3 and 5 the signal M_MAN is used by the photocell Slaves as a sync signal, i.e. a time reference against which to calculate the instant for turning on or off the emitting and receiving stages of the light beam.

Through a hardware setting or mechanical switches, e.g. DIP switches or jumpers, one can set on each pair of photocell Slave (receiver + transmitter) an equal delay for turning on/off, but different from the other couples.

E.g. for two pairs of photocells called FF1 and FF2, the situation is as in Fig. 5. After the signal M_MAN, the pair FF1 is activated (receiver + transmitter) in the time interval ON_FF1, while the pair FF2 is turned off. The pair FF2 is active (receiver + transmitter) in the time interval ON_FF2, when the pair FF1 is by this time disabled. Note that this management also eliminates the problem of interference between different pairs of photocells, because the only active beam is that of the corresponding transmitter.

The receiver photocell Slave stores the state of the beam, interrupted or free, during the intervals ON_FF1, ON_FF2, and will forward it to the Master during his transmission turn with a packet M_Sn, see Fig. 3.

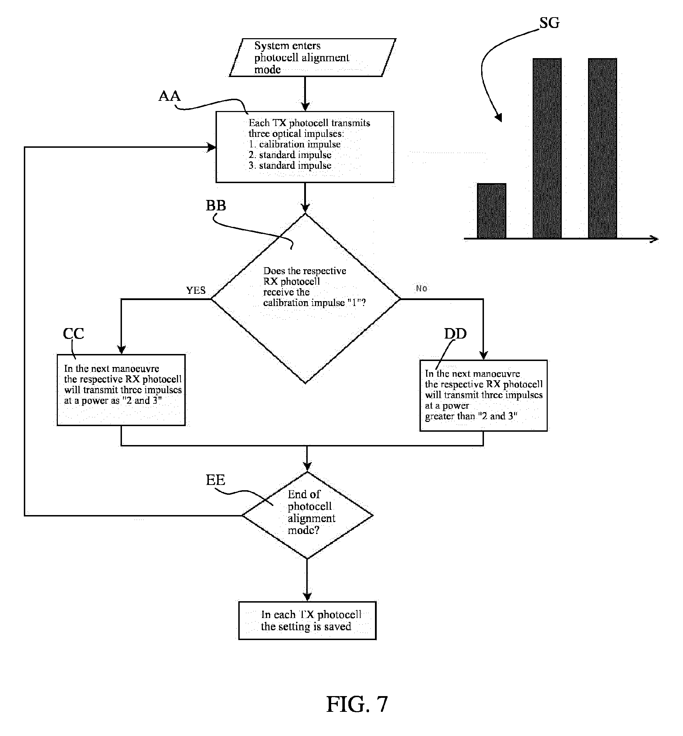

With reference to Figure 7 we describe a method of energy saving for the Slave which contains a photocell-TX (optical transmitter), so as to optimize both the optical range and the consumption. If the power of the optical signal is too low, the security system will always consider the photocell as interrupted; vice versa if the optical power is too high, because of reflections the system could consider the photocell uninterrupted even when a obstacle is present.

The system implements an automatic adaptation.

It enters a diagnostic mode, e.g. by pressing a button on the Master. The Master then gives orders and receives messages from the photocell Slaves for coordinating a calibration phase of each group of photocells.

The Master (when the gate is not moving) orders the transmitter-photocell (block AA) to transmit a test signal (see signal SG), consisting of three pulses: a calibration pulse and two standard power pulses. It then verifies (block BB) whether the receiver photocell has been able to receive the calibration impulse. If so (block DC), the receiver photocell informs the Master, which will send to the transmitter photocell Slave the proper power value to set the optical transmitter with, i.e. a power equal to that of the last two pulses. If not (block DD) the transmitter photocell will transmit with more power. The procedure is iterated (block EE) for all pairs of photocells, and for each photocell then the power settings are stored.

During the initializing phase of the network, for the Slaves a transmission power is set. This power may not be as narrow as possible, causing unnecessary consumption, or, because of the variation in environmental conditions or the sudden appearance of an obstacle, it could happen that the transmission power of the Slave is too low to allow reliable communication to the Master. Moreover, given that for consumption issues the power in transmission is not much higher than is strictly necessary, all devices can not be located but in fixed positions throughout their lifetime.

The invention solves these problems by setting the power transmission variable during operation. One can get that consumption is always as low as possible, and at the same time that all Slaves properly communicate with the Master.

The Master always transmits at fixed power known to the Slaves. Consequently, each Slave can estimate the attenuation introduced by the transmission channel and adjust the transmission power in such a manner that at any time, against any change in external conditions, the power received by the Master appears roughly constant, i.e. fixed to a predetermined value. This estimate is greatly simplified if the transmitted power of the Master is fixed to a determined value.

The invention adopts other transmission methods for the optics of the photocell Slaves, always to decrease energy consumption and to respond appropriately to the needs of the system. Specifically:
- with the door moving the optics of the transmitter transmits to the corresponding receiver photocell Slave with a period T_{T}, for example 0.25 ms;
- during the pause phase between the opening maneuver and the subsequent closing maneuver (door stops), the transmitter optics transmits with period T_{R}> T_{T}, e.g. 0.5 sec;
- during non-maneuver (door stopped) the optics of the transmitter does not transmit.

The Slave implementing the sensitive edge is a safety device, and therefore uses e.g. the same communication strategies with the Master of a photocell receiver Slave. The sensitive edge Slave can have a battery and a solar panel, or just the battery. To save the battery onboard as much as possible, the control means of the sensitive edge activate the obstacle detection circuitry only when the system is performing a maneuver, while they turn it off otherwise.

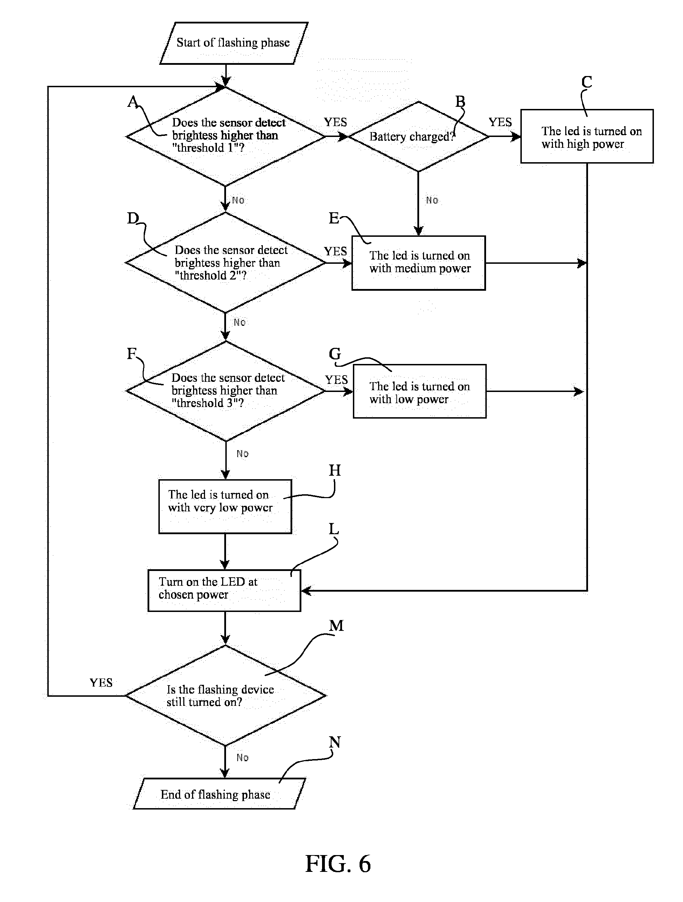

The network device that consumes the most is the flashing light. In an attempt to optimize power consumption without compromising brightness, the invention uses the following strategy (see Figure 6). A light sensor is used, e.g. a photo-diode or the solar panel of the device itself, to adjust the brightness of the flashing so as to make the light thereof visible when the sun or other element lights it up, and not to have too much light when there is shadow or at night. The greater the ambient light, the greater the emitted light power output must be.

A rule can be that the flashing occurs with power (brightness) inversely proportional to the energy supplied by the solar cell (or by the state of charge of the battery or by a light detector means), which is proportional to the illumination of the place.

By setting a switch in the flasher Slave one can set the device as a courtesy light, turning on the light only at dusk/night using the solar panel as a sensor or a photodiode.

As another rule, thresholds of ambient light may be set, for example four thresholds of decreasing light, see Fig. 6.

It is verified (Block A) if the ambient light exceeds the first threshold (the larger one). If so, (Block B) the state of charge of the battery is verified: if it is charged the power of the flasher is set high (block C), otherwise (Block E) at medium power. If a threshold is not exceeded, the light level is compared with a lower threshold (blocks D and F) and for the flasher an always lower power (blocks E and G) is set for the use. If none of the thresholds is exceeded (Block H) the power of the flashing will be the least. Finally (block L) the flasher is actually turned on at the calculated power, and after a timer phase (M block) the flasher is turned off (block N).

## Claims

1. Method for adjusting the optical power emitted by a flashlight belonging to a home automation system formed by components (S1, S2) and a control unit (M1) networked together and adapted to coordinate and/or to supervise for safety the maneuver of a movable barrier such as sliding or hinged gates, doors or garage doors, shutters, blinds, curtains or blinds in general,
**characterized in that**
the light intensity of the flashlight is modified on the basis of conditions detected by a sensor of ambient light.

2. Method according to claim 1, wherein the light intensity to use for the flashlight is determined by comparing the light sensor signal with one or more thresholds.

3. Method according to claim 1, wherein the flashing occurs with power (brightness) inversely proportional to the energy supplied by a solar cell, or by the state of charge of the battery or by a light detector means, which is proportional to the illumination of the place.
